# EUROPÄISCHE PATENTSCHRIFT

(11) **EP 3 649 323 B1**
(45) Veröffentlichungstag und Bekanntmachung des Hinweises auf die Patenterteilung: **19.05.2021**
(21) Anmeldenummer: 18759559.0
(22) Anmeldetag: 07.08.2018
(51) Int. Cl.: F01D 5/16, F16F 7/104, B22F 3/105, B22F 3/11, B22F 5/04, B22F 5/10

(54) **FUNKTIONALE STRUKTUR, ZUGEHÖRIGE KOMPONENTE FÜR EINE STRÖMUNGSMASCHINE UND TURBINE**
FUNCTIONAL STRUCTURE, CORRESPONDING COMPONENT FOR A TURBOMACHINE AND TURBINE
STRUCTURE FONCTIONELLE, COMPOSANT DE TURBOMACHINE ET TURBINE ASSOCIÉS

(30) Priorität: 11.08.2017 DE 102017214060
(43) Veröffentlichungstag der Anmeldung: 13.05.2020
(73) Patentinhaber: Siemens Energy Global GmbH & Co. KG, 81739 München (DE)
(72) Erfinder: BLANK, Robin, 14167 Berlin (DE); FARAHBOD-STERNAHL, Lena, 30449 Hannover (DE); KIENER, Christoph, 81369 München (DE); KYECK, Sascha Martin, 14197 Berlin (DE); KÜSTERS, Yves, 10829 Berlin (DE); PURSCHKE, Simon, 12209 Berlin (DE); REYMANN, Helge, 14167 Berlin (DE)
(86) Internationale Anmeldenummer: PCT/EP2018/071334
(87) Internationale Veröffentlichungsnummer: WO 2019/030201

(56) Entgegenhaltungen:
- EP-A1- 3 018 292
- WO-A1-2013/163047
- WO-A1-2015/112891
- US-A- 5 924 845
- US-A1- 2016 379 724

## Beschreibung

Die vorliegende Erfindung betrifft eine funktionale Struktur, beispielsweise eine Struktur für einen Energiewandler oder eine Dämpfungsstruktur sowie eine Komponente für eine Strömungsmaschine, und eine Turbine.

Die genannte Komponente oder das Bauteil ist beispielsweise für den Einsatz in einer Strömungsmaschine, vorzugsweise im Heißgaspfad einer Gasturbine vorgesehen. Das Bauteil besteht vorzugsweise aus einem Hochtemperaturwerkstoff oder einer Superlegierung, insbesondere einer nickel- oder kobaltbasierten Superlegierung. Die Legierung kann ausscheidungsgehärtet oder ausscheidungshärtbar sein.

Vorzugsweise ist die Funktionalstruktur bzw. die Komponente mittels eines generativen oder additiven Herstellungsverfahrens herstellbar und/oder hergestellt. Additive Verfahren umfassen beispielsweise als Pulverbettverfahren das selektive Laserschmelzen (SLM) oder Lasersintern (SLS) oder das Elektronenstrahlschmelzen (EBM). Ebenso gehört das Laserauftragschweißen (LMD) zu den additiven Verfahren.

Ein Verfahren zum selektiven Laserschmelzen ist beispielsweise bekannt aus EP 2 601 006 B1.

Weiterhin sind in DE 102010063725 ein Bauteil mit einer Dämpfungsfunktionalität sowie ein Verfahren zum additiven Aufbau des Bauteils beschrieben.

EP 3 018 292 A1 offenbart eine funktionale Struktur zur Schwingungsdämpfung in einer Turbinenschaufel gemäß dem Oberbegriff des Anspruchs 1.

Additive Fertigungsverfahren (englisch: "additive manufacturing") haben sich als besonders vorteilhaft für komplexe oder kompliziert oder filigran designte Bauteile, beispielsweise labyrinthartige Strukturen, Kühlstrukturen und/oder Leichtbau-Strukturen erwiesen. Insbesondere ist die additive Fertigung durch eine besonders kurze Kette von Prozessschritten vorteilhaft, da ein Herstellungs- oder Fertigungsschritt eines Bauteils direkt auf Basis einer entsprechenden CAD-Datei erfolgen kann.

Insbesondere in rotierenden Maschinen, beispielsweise Strömungsmaschinen, kommt es zu Vibrationen oder Schwingungen, die die Lebensdauer der Komponenten dieser Maschinen herabsetzen. Bei Strömungsmaschinen entstehen diese Schwingungen beispielsweise im Betrieb einer entsprechenden Turbine durch die Drehung der Rotorkomponenten. Diese Schwingungen können weiterhin zur Rissinitiierung bis hin zum Versagen des Bauteils führen. Dies kann wiederum Folgeschäden an der gesamten Strömungsmaschine verursachen. Unabhängig von rotierenden Komponenten kann es beispielsweise im Gaspfad einer Turbine zu Schwingungen kommen, die den optimalen Strömungsverlauf stören und so ebenfalls zu Bauteilschäden führen können. Die Integration (schwingungs-)dämpfender Strukturen kann diese Vibrationen und Schwingungen reduzieren, im Idealfall sogar kompensieren.

Es ist daher eine Aufgabe der vorliegenden Erfindung, Mittel anzugeben, welche eine intelligente Schwingungs- oder Vibrationsdämpfung, oder sogar Schwingungskompensation ermöglichen. Weiterhin kann über die beschriebenen Mittel eine vorteilhafte Energiespeicherung ermöglicht werden.

Diese Aufgabe wird durch den Gegenstand der unabhängigen Patentansprüche gelöst. Vorteilhafte Ausgestaltungen sind Gegenstand der abhängigen Patentansprüche.

Ein Aspekt der vorliegenden Erfindung betrifft eine funktionale Struktur gemäß Anspruch 1, beispielsweise für den Einsatz in einem Energiewandler, insbesondere einer Strömungsmaschine, wie einer Gasturbine. Die Struktur umfasst ein Gitter mit mindestens einer Gitterzelle. Vorzugsweise ist mit der Gitterzelle eine Elementarzelle gemeint insbesondere mit einer kubischen, würfelförmigen, rhomboedrischen oder hexagonalen Geometrie. Die

Gitterzelle umfasst Gitterknoten und mit den Gitterknoten verbundene Gitterstreben, wobei die Gitterzelle weiterhin, vorzugsweise im Inneren der Gitterzelle, eine Schwungmasse aufweist, welche über mindestens einen Ausleger mit einem Gitterknoten verbunden ist. Die Schwungmasse ist im Einsatz der Struktur zweckmäßigerweise mit dem Ausleger verbunden und zum Aufnehmen von, beispielsweise mechanischer, Energie ausgebildet, wobei eine Gitterkonstante oder eine Länge oder Höhe der Gitter- oder Elementarzelle eine Abmessung von weniger als 100 mm aufweist. Diese Größenverhältnisse oder Geometrieen sind für die Eignung zur Herstellung durch additive Verfahren besonders zweckmäßig.

Die genannte Schwungmasse und der Ausleger - beispielsweise ebenfalls eine Gitterstrebe, bildet zusammen mit dem Rest des Gitters oder der Gitterzelle vorzugsweise ein schwingungsfähiges System.

Die funktionale Struktur wird vorliegend vorzugsweise durch ein additives Herstellungsverfahren hergestellt. Die Geometriefreiheitsgrade, welche die additive Herstellung, insbesondere das selektive Laserschmelzen, bietet, können für die beschriebene Erfindung besonders zweckmäßig ausgenutzt und insbesondere die Schwungmasse samt Ausleger für den beschriebenen dämpfungs- oder Energiespeichereinsatz konfektioniert werden.

Der Ausleger kann strukturell ähnlich zu den Gitterstreben ausgebildet sein.

Im Falle des Einsatzes der Funktionalen Struktur als Dämpfungselement, wird die Schwungmasse durch eine Vibration oder Schwingungen vorzugsweise elastisch ausgelenkt oder relativ zu der Gitterzelle bewegt, wodurch (mechanische) Schwingungsenergie absorbiert oder aufgenommen wird. Dies führt vorzugsweise zu einer Dämpfung der gesamten, die funktionale Struktur aufweisenden Komponente, wie einer Turbinenschaufel. Im Falle eines Energiespeichers ist die Funktionalität analog und die Schwungmasse nimmt ebenfalls Energie auf, welche beispielsweise durch geeignete Mittel zu einem späteren Zeitpunkt wieder abgegeben oder gewandelt werden kann.

In einer Ausgestaltung ist die Geometrie des Auslegers und/oder der Schwungmasse auf den bestimmungsgemäßen Einsatz der Struktur angepasst. Beispielsweise können das Material und/oder die Masse der Schwungmasse und/oder eine entsprechende Massenverteilung derselben auf den bestimmungsgemäßen Einsatz der Komponente oder der Struktur angepasst sein. Vorzugsweise ist weiterhin eine Geometrie oder Länge, welche beispielsweise die Schwingungsmoden oder Resonanzfrequenzen des Auslegers (inklusive Schwungmasse) bestimmt entsprechend des bestimmungsgemäßen Einsatzes wählbar. Beispielweise können eine Dicke des Auslegers und/oder eine Geometrie der Schwungmasse durch ein additives Fertigungsverfahren besonders einfach gewählt oder überhaupt erst ermöglicht werden.

In einer Ausgestaltung weist die Struktur eine Vielzahl von ähnlichen, beispielweise geometrisch ähnlichen, oder gleichartigen Gitterzellen auf. Durch diese Vielzahl oder Mehrzahl von beispielsweise auf der entsprechenden Komponente nebeneinander angeordneten funktionalen Strukturen oder Gitterzellen kann vorzugsweise die Geometrie der Komponente beibehalten und trotzdem eine effiziente Dämpfungswirkung erzielt werden.

Gemäß der Erfindung weist der Ausleger eine Sollbruchstelle auf, welche bei einer im Verhältnis zum bestimmungsgemäßen Betrieb der Struktur übermäßigen mechanischen Belastung, beispielsweise Vibrationen oder Schwingungen, bricht oder auslöst und somit eine Notfunktion der die Struktur aufweisenden Komponente ermöglicht. Beispielsweise kann im Falle einer im Heißgaspfad oder Rotor einer Gasturbine angewendeten Komponente eine solche Sollbruchstelle eine Notlauffunktionalität der Turbine ermöglichen, sodass die entsprechende Rotor- oder Schaufelkomponente im Gegensatz zu einer vollständigen Zerstörung zumindest noch ein zerstörungsfreies Herunterfahren der Turbine ermöglicht.

In einer Ausgestaltung ist die Schwungmasse im Einsatz der Struktur zum Aufnehmen von dynamischer Energie, insbesondere Vibrations- oder Schwingungsenergie, ausgebildet.

In einer Ausgestaltung ist die Struktur für den Einsatz in einer Strömungsmaschine vorgesehen, vorzugsweise in einem rotierenden Teil einer Gasturbine.

In einer Ausgestaltung ist die Struktur für den Einsatz als Energiespeicher und/oder zur Energieumwandlung ausgebildet.

Ein weiterer Aspekt der vorliegenden Erfindung betrifft ein Verfahren zur additiven Herstellung der Funktionalstruktur.

Ein weiterer Aspekt der vorliegenden Erfindung betrifft eine Komponente für eine Strömungsmaschine gemäß Anspruch 6, vorzugsweise einer Gasturbine, umfassend die funktionale Struktur.

In einer Ausgestaltung rotiert die Komponente im bestimmungsgemäßen Einsatz.

In einer Ausgestaltung ist die Komponente für den Einsatz im Heißgaspfad einer Gasturbine ausgelegt. Gemäß dieser Ausgestaltung ist die Komponente vorzugsweise aus einem Hochtemperaturwerkstoff und/oder einer nickel- oder kobaltbasierten Superlegierung gefertigt.

In einer Ausgestaltung ist die Komponente eine Turbinenschaufel.

Ein weiterer Aspekt der vorliegenden Erfindung betrifft eine Turbine gemäß Anspruch 9 umfassend die funktionale Struktur und/oder die Komponente.

Ausgestaltungen, Merkmale und/oder Vorteile, die sich vorliegend auf die Struktur beziehen, können ferner die Komponente betreffen oder umgekehrt.

Weitere Einzelheiten der Erfindung werden nachfolgend anhand der Figuren beschrieben.
Figur 1 zeigt eine schematische perspektivische Ansicht einer funktionalen Struktur.
Figur 2 zeigt eine beispielhafte Komponente umfassend die Struktur aus Figur 1.

In den Ausführungsbeispielen und Figuren können gleiche oder gleich wirkende Elemente jeweils mit den gleichen Bezugszeichen versehen sein. Die dargestellten Elemente und deren Größenverhältnisse untereinander sind grundsätzlich nicht als maßstabsgerecht anzusehen, vielmehr können einzelne Elemente zur besseren Darstellbarkeit und/oder zum besseren Verständnis übertrieben dick oder groß dimensioniert dargestellt sein.

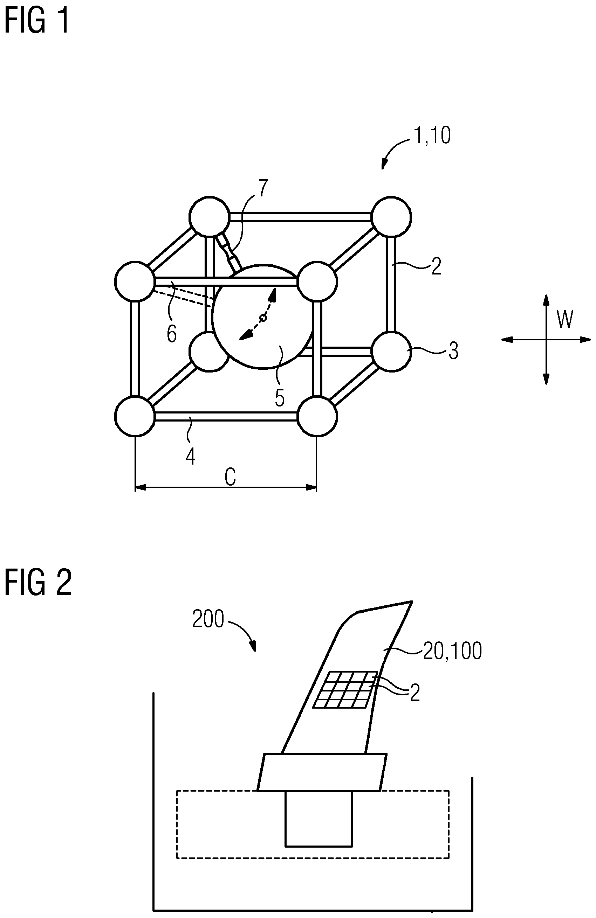

Figur 1 zeigt beispielhaft eine funktionale Struktur 1. Die funktionale Struktur 1 kann ein Energiespeicher 10 zum Speichern von beispielsweise mechanischer Energie oder zum Umwandeln oder Wandel von mechanischer Energie sein oder einen solchen umfassen.

Die Struktur 1 umfasst mindestens eine Gitterzelle 2. Die Gitterzelle 2 stellt vorzugsweise eine kubische, rhomboedrische, hexagonale, quaderförmige oder würfelförmige Elementarzelle oder Gitterzelle dar. Die Gitterzelle 2 umfasst Gitterknoten 3. Die Gitterzelle 2 umfasst weiterhin die Gitterknoten 3 verbindende Gitterstreben 4. Gemäß der gezeigten kubischen oder würfelförmigen Zellengeometrie weist die Gitterzelle 2 vorzugsweise acht Gitterknoten 3 und zwölf die Gitterknoten verbindende Gitterstreben 4 in regelmäßiger Anordnung auf.

Die Gitterzelle 2 beziehungsweise die Struktur 1 weist weiterhin eine Schwungmasse 5 auf. Die Schwungmasse 5 ist über einen Ausleger 6 mit mindestens einem der Gitterknoten 3 verbunden (vergleiche durchgezogen dargestellter Ausleger). Statt lediglich einem Ausleger, kann die Schwungmasse 5 über mindestens einen weiteren Ausleger 6 (vergleiche gestrichelt dargestellter Ausleger) mit einem Gitterknoten 3 verbunden sein. Durch die Anzahl der Ausleger, oder die Dicke oder Länge der Ausleger 6 kann beispielsweise eine Schwingungsfrequenz, Anregungsfrequenz oder Eigenfrequenz der schwingfähigen Schwungmasse 5 eingestellt werden. Den gleichen Effekt kann eine Variation des Elastizitätsmoduls des Auslegers und/oder der Masse oder Dichte der Schwungmasse 5 als Parameter haben.

Im Falle einer externen Schwingung oder Rotation (angedeutet durch Pfeilkreuz in Figur 1), welche die Struktur 1, beispielsweise im Betrieb einer die funktionale Struktur 1 aufweisenden Komponente 100 (vergleiche Figur 2), erfährt, speichert die Schwungmasse 5 vorzugsweise mechanische Schwingung oder Vibrationsenergie W, indem sie sich relativ zu dem Rest der Gitterzelle 2 auslenkt, mechanisch bewegt oder rotiert. Dadurch kann vorzugsweise eine Zerstörung der gesamten Komponente verhindert werden.

Die Gitterzelle 2 kann beispielsweise eine Gitterkonstante C bzw. Kantenlänge der Gitterstreben 4 (im Falle einer kubischen Gittergeometrie) von höchstens 100 mm aufweisen. Beispielsweise kann die genannte Gitterkonstante C 50 mm betragen, vorzugsweise 10 mm oder weniger, beispielsweise 5 mm oder 1 mm oder wenigstens 0,5 mm.

Bei der funktionalen Struktur 1, wie sie in Figur 1 dargestellt ist, kann es sich um einen Energiewandler handeln, welcher beispielsweise mechanische Schwingungs- oder Vibrationsenergie, welche von außen auf die Struktur 1 einwirkt in kinetische und/oder mechanische (Schwingungs- oder Vibrationsenergie) der Schwungmasse 5 umwandelt. Je nach Ausgestaltung des schwingenden Systems, umfassend den Ausleger 6 und die Schwungmasse 5 kann unter Umständen durch die funktionale Struktur 1 ein Energiespeicher realisiert werden, beispielsweise wenn zu einem späteren Zeitpunkt die Schwingungsenergie der Schwungmasse 5 wieder in eine andere Energieform, beispielsweise Wärme, umgewandelt wird.

Figur 2 zeigt beispielhaft eine schematische Seitenansicht einer Turbine 200, aufweisend eine Komponente 100 bzw. eine Turbinenschaufel 20. Die Turbinenschaufel 20 weist ein Schaufelblatt (nicht explizit gekennzeichnet) auf. Das Schaufelblatt weist eine Vielzahl von funktionalen Strukturen - ähnlich der in Figur 1 einzeln beschriebenen funktionalen Struktur - als Dämpfungsstruktur auf. Die Dämpfungsstrukturen 1 beziehungsweise Gitterzellen 2, welche die Turbinenschaufel 20 in Figur 2 aufweist, können insbesondere gleichartig, ähnlich und/oder auch hinsichtlich ihrer Eigenfrequenzen unterschiedlich dimensioniert oder konfektioniert ausgestaltet sein. Insbesondere die variable Gestaltung solcher Dämpfungsstrukturen ist durch die additive Fertigung, insbesondere selektives Laserschmelzen, auf einfache Weise möglich. Beispielsweise kann die in Figur 2 gezeigte Dämpfungsstruktur in ihren Eigenfrequenzen abgestuft sein, d.h. dass jede einzelne funktionale Gitterzelle 2 der Struktur 1 eine unterschiedliche Eigenfrequenz und damit Aufnahmefähigkeit für mechanische, insbesondere dynamische, Lasten oder Energien haben kann. Dadurch ist die Bandbreite zur Aufnahme mechanischer Energie und damit möglicherweise eine Zerstörungstoleranz der Turbinenschaufel 20 vorteilhafterweise besonders groß.

Weiterhin weist die Turbinenschaufel 20 einen Schaufelfuß auf, über den die Turbinenschaufel beispielsweise mit einem Rotor oder einer Rotorscheibe (nicht explizit gekennzeichnet) der Turbine 200 verbunden ist.

Im Profil der Turbinenschaufel 20 betrachtet kann weiterhin die funktionale Struktur 1 bestehend aus einer Vielzahl von

Gitterzellen 2 umfänglich angeordnet werden, wodurch sich eine Aufnahmefähigkeit für dynamische externe Einflüsse beispielsweise an ein Massenprofil der Komponente (im Querschnitt), anpassen lässt.

Alternativ zu der beispielhaft gezeigten Turbinenschaufel 20 können allgemein rotierende Teile bzw. jegliche schwingungs- oder vibrationserzeugende Komponenten gemeint sein.

Die Erfindung ist nicht durch die Beschreibung anhand der Ausführungsbeispiele auf diese beschränkt, sondern umfasst jedes neue Merkmal sowie jede Kombination von Merkmalen. Dies beinhaltet insbesondere jede Kombination von Merkmalen in den Patentansprüchen, auch wenn dieses Merkmal oder diese Kombination selbst nicht explizit in den Patentansprüchen oder Ausführungsbeispielen angegeben ist.

## Patentansprüche

1. Funktionale Struktur (1) für den Einsatz in einem Energiewandler, die Struktur (1) umfassend ein Gitter mit mindestens einer Gitterzelle (2), umfassend Gitterknoten (3) und mit den Gitterknoten (3) verbundene Gitterstreben (4), wobei die Gitterzelle (2) weiterhin eine Schwungmasse (5) aufweist, welche über mindestens einen Ausleger (6) mit einem Gitterknoten (3) verbunden ist, wobei die Schwungmasse (5) im Einsatz der Struktur (1) zum Aufnehmen von Energie (W) ausgebildet ist, und wobei eine Gitterkonstante (C) der Gitterzelle (2) eine Abmessung von weniger als 100 mm aufweist, **dadurch gekennzeichnet, dass** der Ausleger (6) eine Sollbruchstelle (7) aufweist, welche bei einer im Verhältnis zum bestimmungsgemäßen Betrieb der Struktur (1) übermäßigen mechanischen Belastung bricht und somit eine Notfunktion einer die Struktur (1) aufweisenden Komponente (100) ermöglicht.

2. Struktur (1) gemäß Anspruch 1, wobei die Struktur (1) eine Vielzahl von ähnlichen oder gleichartigen Gitterzellen (2) aufweist.

3. Struktur (1) gemäß Anspruch 1 oder 2, wobei die Schwungmasse (5) im Einsatz der Struktur (1) zum Aufnehmen von dynamischer Energie, insbesondere Vibrations- oder Schwingungsenergie, ausgebildet ist.

4. Struktur (1) gemäß einem der vorhergehenden Ansprüche, welche für den Einsatz in einer Strömungsmaschine (200), vorzugsweise in einem rotierenden Teil einer Gasturbine, vorgesehen ist.

5. Struktur (1) gemäß einem der vorhergehenden Ansprüche, welche für den Einsatz als Energiespeicher (10) und/oder zur Energieumwandlung ausgebildet ist.

6. Komponente (100) für eine Strömungsmaschine (200), vorzugsweise eine Gasturbine, umfassend eine funktionale Struktur (1) gemäß einem der vorhergehenden Ansprüche.

7. Komponente (100) gemäß Anspruch 6, welche bei ihrem bestimmungsgemäßen Einsatz rotiert und für den Einsatz in einem Heißgaspfad einer Gasturbine (200) ausgelegt ist.

8. Komponente (100) gemäß Anspruch 7, welche eine Turbinenschaufel (20) ist.

9. Turbine (200) umfassend eine funktionale Struktur (1) gemäß einem der Ansprüche 1 bis 7 und/oder eine Komponente (100) gemäß einem der Ansprüche 6 bis 8.

## Claims

1. Functional structure (1) for use in an energy converter, the structure (1) comprising a lattice having at least one lattice cell (2), comprising lattice nodes (3) and lattice connecting elements (4) connected to the lattice nodes (3), wherein the lattice cell (2) furthermore has an inertia mass (5), which is connected to a lattice node (3) by means of at least one arm (6), wherein the inertia mass (5) is designed to absorb energy (W) when the structure (1) is in use, and wherein a lattice constant (C) of the lattice cell (2) has a dimension of less than 100 mm, **characterized in that** the arm (6) has a predetermined breaking point (7), which breaks under a mechanical load which is excessive in relation to the intended operation of the structure (1) and thus allows an emergency function of a component (100) having the structure (1).

2. Structure (1) according to Claim 1, wherein the structure (1) has a multiplicity of lattice cells (2) which are similar or of the same type.

3. Structure (1) according to Claim 1 or 2, wherein the inertia mass (5) is designed to absorb dynamic energy, in particular vibration or oscillation energy, when the structure (1) is in use.

4. Structure (1) according to any of the preceding claims, which is provided for use in a turbomachine (200), preferably in a rotating part of a gas turbine.

5. Structure (1) according to any of the preceding claims, which is designed for use as an energy storage device (10) and/or for energy conversion.

6. Component (100) for a turbomachine (200), preferably a gas turbine, comprising a functional structure (1) according to any of the preceding claims.

7. Component (100) according to Claim 6, which rotates while being used as intended and is designed for use in a hot gas path of a gas turbine (200).

8. Component (100) according to Claim 7, which is a turbine blade (20).

9. Turbine (200) comprising a functional structure (1) according to any of Claims 1 to 7 and/or a component (100) according to any of Claims 6 to 8.

## Revendications

1. Structure (1) fonctionnelle à utiliser dans un convertisseur d'énergie, la structure (1) comprenant un réseau ayant au moins une cellule (2) de réseau, comprenant des nœuds (3) de réseau et des barres (4) de réseau reliées aux nœuds (3) de réseau, la cellule (2) de réseau ayant en outre un volant (5), qui est relié à un nœud (3) du réseau par au moins un bras (6), le volant (5) étant constitué pour absorber de l'énergie (W) lorsque la structure (1) est en utilisation, et une constante (C) de réseau de la cellule (2) du réseau a une dimension de moins de 100 mm, **caractérisée en ce que** le bras (6) a un point (7) destiné à se rompre, qui, pour une charge mécanique excessive par rapport au fonctionnement conforme aux prescriptions de la structure (1), se rompt et rend ainsi possible un fonctionnement d'urgence d'un élément (100) ayant la structure (1).

2. Structure (1) suivant la revendication 1, dans laquelle la structure (1) a une pluralité de cellules (2) de réseau semblables ou pareilles.

3. Structure (1) suivant la revendication 1 ou 2, dans laquelle le volant (5) est constitué pour absorber de l'énergie dynamique, notamment de l'énergie de vibration ou d'oscillation, lorsque la structure (1) est en utilisation.

4. Structure (1) suivant l'une des revendications précédentes, qui est prévue pour l'utilisation dans une turbomachine (200), de préférence dans une partie tournante d'une turbine à gaz.

5. Structure (1) suivant l'une des revendications précédentes, qui est constituée pour l'utilisation comme accumulateur (10) d'énergie et/ou pour la transformation d'énergie.

6. Élément (100) d'une turbomachine (200), de préférence d'une turbine à gaz, comprenant une structure (1) fonctionnelle suivant l'une des revendications précédentes.

7. Élément (100) d'une turbomachine suivant la revendication 6, qui tourne lorsqu'elle est utilisée conformément aux prescriptions et, qui est conçue pour être utilisée dans un trajet de gaz chaud d'une turbine (200) à gaz.

8. Élément (100) suivant la revendication 7, qui est une aube (20) de turbine.

9. Turbine (200) comprenant une structure (1) fonctionnelle suivant l'une des revendications 1 à 7 et/ou un élément (100) suivant l'une des revendications 6 à 8.
